Europäisches Patentamt

**European Patent Office**

Office européen des brevets

(19)

(11) Veröffentlichungsnummer: **0 018 008**
**B1**

(12) # EUROPÄISCHE PATENTSCHRIFT

(45) Veröffentlichungstag der Patentschrift:
27.04.83

(51) Int. Cl.³: **C 09 B 7/00,** C 09 B 7/10,
C 09 B 67/04, C 09 B 67/28

(21) Anmeldenummer: **80102126.2**

(22) Anmeldetag: **21.04.80**

(54) Verfahren zur Herstellung von lasierenden Pigmentformen des 4,4',7,7'-Tetrachlorthioindigo.

(30) Priorität: **23.04.79 DE 2916400**

(43) Veröffentlichungstag der Anmeldung:
**29.10.80 Patentblatt 80/22**

(45) Bekanntmachung des Hinweises auf die Patenterteilung:
**27.04.83 Patentblatt 83/17**

(84) Benannte Vertragsstaaten:
**CH DE GB LI**

(56) Entgegenhaltungen:
**DE-A-2 745 149**
**DE-B-2 734 951**

(73) Patentinhaber: **BASF Aktiengesellschaft,
Carl-Bosch-Strasse 38, D-6700 Ludwigshafen (DE)**

(72) Erfinder: **Hoch, Helmut, Dr., Waldstrasse 53c,
D-6706 Wachenheim (DE)**
Erfinder: **Hahn, Erwin, Dr., Am Buechsenackerhang 31,
D-6900 Heidelberg (DE)**
Erfinder: **Hiller, Heinrich, Dr., Theodor-Heuss-Strasse 11,
D-6706 Wachenheim (DE)**

Verfahren zur Herstellung von lasierenden Pigmentformen des 4,4',7,7'-Tetrachlorthioindigo

Die Erfindung betrifft ein Verfahren zur Herstellung von lasierenden Pigmentformen des 4,4',7,7'-Tetrachlorthioindigo, die brillante und farbstarke Färbungen liefern.

4,4',7,7'-Tetrachlorthioindigo, im folgenden als Tetrachlorthioindigo bezeichnet, ist wegen seines hohen Echtheitsniveaus ein wertvoller Farbstoff für die Lack- und Kunststofffärbung. Für Thioindigo und seine Derivate sind eine Reihe von Herstellverfahren bekannt. Nur von einem ist bekannt, dass die Verfahrensprodukte direkt als Pigment verwendet werden können (DE-A Nr. 2457703). Aus diesem Grunde werden in der Patentliteratur neben Herstellverfahren auch Verfahren zur Überführung von rohem Thioindigo in Pigmentformen beschrieben.

Die Herstellung von Thioindigo und seinen Derivaten erfolgt im allgemeinen durch Oxidation der entsprechenden 3-Hydroxythionaphthene. Das 3-Hydroxy-4,7-dichlorthionaphthen kann aus 2,5-Dichlorphenylthioglykolsäure durch Ringschluss in Chlorsulfonsäure oder über das 2,5-Dichlorphenylthioglykolsäurechlorid durch Ringschluss mit Aluminiumchlorid erhalten werden (DE-C Nr. 197162).

Die Oxidation des 3-Hydroxythionaphthens kann mit Natriumpolysulfid oder mit Luft, Eisen-(III)chlorid, Kaliumcyanoferrat(III) oder Kaliumdichromat (DE-C Nr. 194237) erfolgen. Nach der DE-A Nr. 2504935 kann die Oxidation auch mit Peroxidisulfat in wässerig-alkalischer Lösung durchgeführt werden.

Nach der DE-C Nr. 241910 wird Tetrachlorthioindigo auch ohne Isolierung des 3-Hydroxy-4,7-dichlor-1-thionaphthens direkt aus 2,5-Dichlorphenylthioglykolsäure in Chlorsulfonsäure bei 35° erhalten.

In der DE-A Nr. 2457703 wird die direkte Herstellung einer Pigmentform des Tetrachlorthioindigo durch Oxidation des 3-Hydroxy-4,7-dichlorthionaphthens in alkalisch wässerigem oder wässerig-organischem Medium mit Sauerstoff beschrieben. Die so erhaltene Pigmentformen gibt stark deckende, relativ trübe und farbschwache Färbungen.

Der nach den anderen bekannten Verfahren erhaltene rohe Tetrachlorthioindigo muss durch Formierung, gegebenenfalls nach vorheriger Reinigungsoperation, in eine koloristisch wertvolle Pigmentform überführt werden. Die Formierung kann z.B. erfolgen durch Mahlen mit Salz (DE-C Nr. 1137156), durch Umfällen aus Schwefelsäure oder Chlorsulfonsäure mit anschliessender Behandlung mit organischen Lösungsmitteln (DE-A Nr. 2504962) oder durch Mahlen mit grossen Mengen Dispergiermitteln (BE-A Nr. 591437). Alle diese Verfahren haben den Nachteil, dass sie aufwendig und damit teuer sind und eine erhebliche Belastung des Abwassers verursachen.

Nach den Angaben in der DE-B Nr. 2043820 sollen diese Nachteile dadurch vermieden werden, dass die Rohpigmente in wässeriger Suspension in Gegenwart einer wässerigen Base gemahlen werden. Das Zerkleinern des Rohpigments dauert — nach den Angaben in den Beispielen 1 bis 4 — 48 h. Das so erhaltene Tetrachlorthioindigopigment soll in Einbrennlacken transparentere Färbungen mit höherer Farstärke und Reinheit des Farbtons liefern als die richtige Pigmentform, die unter sonst gleichen Bedingungen durch Mahlen in Abwesenheit von Alkali erhalten wird.

Weiter ist aus der DE-B Nr. 2734951 ein Verfahren zur Nachbehandlung von 4,4',7,7'-Tetrachlorthioindigo bekannt, bei dem das Rohprodukt mit Schwefelsäure in Form einer zähen Masse geknetet und das Knetgut durch Eintragen in Wasser zerlegt wird.

Aufgabe der vorliegenden Erfindung war es, ein Verfahren aufzufinden, nach welchem Tetrachlorthioindigo in Pigmentformen überführt werden kann, die im Vollton Färbungen mit hoher Lasur und Brillanz und im Weissverschnitt eine hohe Farbstärke bei reinem und röterem Farbton liefern. Als weitere Aufgabe sollte das Verfahren aus einfachen und kostengünstigen Synthese- und Finish-Schritten bestehen.

Es wurde gefunden, dass man lasierende Pigmentformen des Tetrachlorthioindigo erhält, wenn man dessen Leukoverbindung in wässerig-alkalischer Suspension in Gegenwart von Dithionit unter gleichzeitiger Einwirkung von Scherkräften bei Temperaturen zwischen 20 und 100°C oxidiert.

Nach dem erfindungsgemässen Verfahren erhält man Pigmentformen des Tetrachlorthioindigos, die im Vollton brillante und lasierende Färbungen und im Weissverschnitt farbstarke und reine Färbungen mit rotstichigem Farbton liefern. In diesen Eigenschaften sind die Verfahrensprodukte der vorliegenden Erfindung den Tetrachlorthioindigopigmenten des Standes der Technik deutlich überlegen. Die nach dem erfindungsgemässen Verfahren erhältlichen Pigmente sind gut verteilbar und dem nach der DE-B Nr. 2043820 erhältlichen Tetrachlorthioindigopigment in der Brillanz, der Farbstärke und der Lasur deutlich überlegen. Ausserdem weist die nach der DE-B Nr. 2043820 erhaltene Pigmentform einen deutlich blaueren Farbton auf.

Das Verfahren gemäss der Erfindung wird im allgemeinen so durchgeführt, dass man die Leukoverbindung in wässeriger Suspension, die Alkalimetalldithionit und Alkalimetallhydroxid enthält, unter Einwirkung von Scherkräften oxidiert.

Die Suspension kann durch Suspendieren der isolierten Leukoverbindung in einer alkalischen Dithionitlösung oder direkt durch Verküpen von Tetrachlorthioindigo hergestellt werden.

In ersterem Fall erfolgt das Verküpen des Thioindigoderivates in der 20- bis 60fachen Gewichtsmenge Wasser, bezogen auf Tetrachlorthioindigo. Die Menge an Alkalimetallhydroxid, das vorzugsweise in Form von Natronlauge angewendet wird, hängt von der Menge Dithionit ab. Die Alkalimetallhydroxidmenge beträgt im allgemeinen bei der Verwendung von Natriumhydroxid das 1- bis 2fache der Menge an Alkalimetalldithionit. Die benötigte Menge an Dithionit, das vorzugsweise in Form des Natriumsalzes verwendet wird, liegt — bezogen auf Tetrachlorthioindigo — bei der 0,1- bis 0,5fachen Gewichtsmenge.

Die Verküpung erfolgt bei Temperaturen zwischen 10 und 80°C, insbesondere bei 20 bis 60°C. Die Reduktion ist nach 0,15 bis 2 h beendet und die Leukoverbindung ausgefallen. Die Leukoverbindung wird isoliert. Man kann die vorliegende wässerige Suspension auch direkt weiterverarbeiten, was wegen des grossen Flüssigkeitsvolumens jedoch nicht zweckmässig ist (geringe Raum/Zeit-Ausbeute an der Pigmentform).

Die Isolierung der Leukoverbindung des Tetrachlorthioindigo ist dann vorteilhaft, wenn eine zusätzlich Reinigung des Ausgangsprodukts, z.B. von in der Küpe löslichen Nebenprodukten, erfolgen soll. Das Filtergut wird dann zweckmässigerweise mit blinder Küpe von 20 bis 30°C gewaschen, bis der Ablauf nur noch schwach gefärbt ist. Als blinde Küpe wird eine Lösung von 10 bis 20 Gewichtsteilen 50 gew.%iger Natronlauge und 10 Gewichtsteilen Natriumdithionit in 1000 Gewichtsteilen Wasser verwendet.

Geht man von Tetrachlorthioindigo aus, der für Pigmentzwecke genügend rein ist, so kann die beim Verküpen erhaltene Suspension der Leukoverbindung direkt oxidiert werden. In diesem Fall wird der Tetrachlorthioindigo vorteilhafterweise in einer 3 bis 20, vorzugsweise 5 bis 15 gew.%igen wässerigen Suspension verküpt. In diesem Fall wendet man zum Verküpen die 0,1- bis 0,5fache Gewichtsmenge an Natriumhydroxid und die 0,1- bis 0,5fache Menge an Natriumdithionit — bezogen auf das Indigoderivat an. Die Verküpung ist in der Regel nach 5 bis 30 min vollständig. Diese Zeitspanne wird bei der praktischen Durchführung benötigt, um das Gemisch aus Tetrachlorthioindigo, Wasser, Alkalimetallhydroxid und Dithionit homogen zu rühren und um die Mahlkörper in der Suspension gleichmässig zu verteilen.

Die Oxidation der Leukoverbindung erfolgt in alkalisch-wässerigem Medium unter Einwirkung von Scherkräften, vorzugsweise in Gegenwart von oberflächenaktiven Mitteln. Vorteilhafterweise oxidiert man die Leukoverbindung in einer alkalisch-wässerigen Suspension, die zu Beginn der Oxidation — bezogen auf die Leukoverbindung — 0,5 bis 50 Gew.% Alkalimetallhydroxid, vorzugsweise Natriumhydroxid, und 1 bis 10, vorzugsweise 2 bis 6 Gew.% Natriumdithionit und das oder die oberflächenaktiven Mittel. Die Konzentration der Leukoverbindung in der Suspension liegt in der Regel zwischen 5 und 15 Gew.%.

Die Scherkräfte werden in der wässerigen Suspension durch Mahlkörper wie Sand-, Keramik-, Metall- oder vorzugsweise Glas- oder Kunststoffkugeln, die durch schnelllaufende Rührer bewegt werden, erzeugt. Als Geräte kommen hierfür z.B. Sandmühlen, Perlmühlen in Betracht.

Die Menge der Mahlkörper liegt bei diskontinuierlicher Durchführung in der Regel zwischen der 10- und 40fachen Gewichtsmenge, bezogen auf die Leukoverbindung. Bei kontinuierlicher Durchführung genügen im allgemeinen 2 bis 3 Passagen, um die koloristisch wertvolle Pigmentform zu erhalten. Bei diskontinuierlicher Durchführung ist die Reaktion nach 3 bis 6 h beendet. Dann liegt die farbstarke Pigmentform vor. Die Oxidation kann durch Einleiten von Luft während des Mahlens oder durch Zugabe von Oxidationsmitteln vor oder während des Mahlens erfolgen.

Als Oxidationsmittel kommen Luftsauerstoff, Wasserstoffperoxid und dessen Addukte an Natriumcarbonat oder Natriumborat in Betracht. Verwendet man Wasserstoffperoxid als Oxidationsmittel, so wird dieses vorteilhafterweise kontinuierlich während der Einwirkung der Scherkräfte zugeben.

Luft ist als Oxidationsmittel bevorzugt.

Die Oxidation erfolgt bei Temperaturen zwischen 20 und 100, vorzugsweise zwischen 30 und 80°C.

Als vorteilhafterweise zu verwendende oberflächenaktive Mittel kommen nichtionische, vor allem jedoch anionische und kationische in Betracht.

Die Menge an diesen Mitteln beträgt 0,2 bis 20, vorzugsweise 0,5 bis 15 Gew.%, bezogen auf die Leukoverbindung.

Als nichtionische oberflächenaktive Mittel sind z.B. zu nennen: $C_{12}$- bis $C_{20}$-Alkanole, N-(-Hydroxy-$C_2$- bis $C_4$-alkyl)amide und N,N-Bis-(hydroxy-$C_2$- bis $C_4$-alkyl)amide von $C_{16}$- bis $C_{20}$-Carbonsäuren, Anlagerungsprodukte von Äthylenoxid an $C_{12}$- bis $C_{20}$-Alkanole, an $C_{12}$- bis $C_{20}$-Fettsäuren, an Amide, an N-Hydroxy-$C_2$- bis $C_4$-alkylamide und N,N-Bis-(hydroxy-$C_2$- bis $C_4$-alkyl)amide von $C_{16}$- bis $C_{20}$-Fettsäuren, an $C_{12}$- bis $C_{20}$-Alkylamine, an $C_8$- bis $C_{20}$-Alkylphenole und an Monoglyceride von Fettsäuren, wobei das Verhältnis Äthylenoxid zu oxalkylierender Verbindung im allgemeinen zwischen 1:1 und 30:1 liegt.

Als anionische oberflächenaktive Mittel kommen z.B. in Betracht: $C_{13}$- bis $C_{18}$-Paraffinsulfonsäuren, $C_{13}$- bis $C_{18}$-Paraffindisulfonsäuren, Sulfobernsteinsäuredi-$C_1$- bis $C_8$-alkylester, sulfiertes Ölsäuredibutylamid, $C_8$- bis $C_{18}$-Alkylbenzolsulfonsäuren, wie Octyl-, Nonyl-, Decyl-, Tetradecyl-, Hexadecyl-, Octadecyl- oder Dodecylbenzolsulfonsäuren, Mono- und Di-$C_3$- bis $C_8$-alkylnaphthalin-2-sulfonsäure, Kondensationsprodukte aus Naphthalin-2- und/oder $C_1$- bis $C_4$-Alkylnaphthalinsulfonsäure und Formaldehyd, Kondensationsprodukte aus Phenolsulfonsäuren, Harnstoff und Formaldehyd, N-$C_{12}$- bis $C_{18}$-Alkyl-N-methylaminoessigsäuren, $C_{16}$- bis $C_{20}$-Fettsäuren, Abietinsäure, Kolophonium, hydriertes Kolophonium, dimerisiertes Kolophonium in Form der Ammonium- und/oder Alkalimetallsalze oder Gemische dieser Säuren.

Als kationische oberflächenaktive Mittel kommen z.B. in Betracht: quartäre Ammoniumverbindungen, wie Salze des Tri-($C_1$- bis $C_4$-alkyl)-benzylammoniums, des Di-($C_1$- bis $C_4$-alkyl)di-

benzylammoniums, des $C_{10}$- bis $C_{20}$-Alkyltri-($C_1$- bis $C_4$-alkyl)ammoniums, des Di-($C_{10}$- bis $C_{20}$-alkyl)di-($C_1$- bis $C_4$-alkyl)ammoniums, der quaternären Tri-($C_1$- bis $C_8$-alkyl)ammonium-polyglykoläther, wie quaterniertes oxäthyliertes Triäthanolamin oder Tripropanolamin, N-$C_{10}$- bis $C_{16}$-Alkylpyridinium-, Benzylpyridinium-, N-$C_{10}$- bis $C_{18}$-Imidazoliniumsalze oder Gemische dieser Ammoniumverbindungen in Form der Chloride, Sulfate, Methylsulfate, Toluol- oder Benzolsulfonate.

Als oberflächenaktive Mittel sind Abietinsäure, Kolophonium, hydriertes Kolophonium, dimerisiertes Kolophonium, $C_{13}$- bis $C_{18}$-Paraffindisulfonsäuren, Sulfobernsteinsäure-di-$C_1$- bis $C_8$-alkylester in Form der Alkalimetall- oder Ammoniumsalze, $C_{10}$- bis $C_{20}$-Alkyltri-($C_1$- bis $C_4$-alkyl)ammoniumsalze, N-$C_{10}$- bis $C_{18}$-Alkylimidazoliniumsalze in Form der Chloride, Sulfate, Methylsulfate, Benzolsulfonate oder Toluolsulfonate, Anlagerungsprodukte von Äthylenoxid an $C_{12}$- bis $C_{20}$-Carbonsäuren (5 bis 30 mol/mol) und an N-(Hydroxy-$C_2$- bis $C_4$-alkyl)amide von $C_{16}$- bis $C_{20}$-Carbonsäuren (3 bis 15 mol/mol) oder Gemische dieser Mittel bevorzugt.

Die durch Oxidation erhaltene wässerig-alkalische Pigmentsuspension wird zunächst von den Mahlkörpern abgetrennt und danach mit Säure, bevorzugt 10 bis 30 gew.%ige Salz- oder Schwefelsäure, neutral bis schwach sauer (pH 5 bis 7) gestellt. Das Pigment wird in üblicher Weise, z.B. durch Filtrieren oder Zentrifugieren, abgetrennt, gewaschen und getrocknet. Die Trocknung erfolgt vorteilhaft unter milden Bedingungen, z.B. unter vermindertem Druck bei 50 bis 80°C.

Das Verfahren gemäss der Erfindung soll durch die folgenden Ausführungsbeispiele weiter erläutert werden. Die im folgenden genannten Teile und Prozentangaben beziehen sich auf das Gewicht.

*Beispiel 1:*

30 Teile 4,4',7,7'-Tetrachlorthioindigo in Form des feuchten wässerigen Presskuchens werden mit 330 Teilen Wasser, das 15 Teile Natronlauge (50%ig) und 10 Teile Natriumthionit enthält, zu einem Teig angerührt. Dann werden 500 Teile Glasperlen (Durchmesser 0,8 bis 1 mm) und 3 Teile dimerisiertes Kolophoniumharz in Form des Natriumsalzes zugegeben und die Suspension mit einem hochtourigen Rühren (2000 tr/min) 4 h bei 25 bis 30°C unter Luftzutritt gemahlen. Anschliessend wird von den Perlen abgesiebt. Zur Entfernung von anhaftendem Farbstoff werden die Glasperlen nochmals in 600 Teilen Wasser suspendiert und die Suspension abgetrennt. Die vereinigten wässerigen Suspensionen werden mit 10%iger Schwefelsäure auf pH 5 angesäuert, der Farbstoff durch Filtrieren abgetrennt und neutralgewaschen. Der Presskuchen wird bei 70°C im Vakuum getrocknet. Das erhaltene Pigment lässt sich in Einbrennlacken gut verteilen. Im Vollton erhält man Rot-Violett-Färbungen von hoher Lasur und Brillanz. Im Weissverschnitt erhält man violette Färbungen, die im Vergleich zu Färbungen mit Pigmenten des Standes der Technik eine deutlich erhöhte Farbstärke und Reinheit bei zugleich röterem Farbton aufweisen.

*Beispiel 2:*

30 Teile 4,4',7,7'-Tetrachlorthioindigo in Form des feuchten, wässerigen Presskuchens, werden mit 330 Teilen Wasser, das 15 Teile Natronlauge (50%ig) und 10 Teile Natriumdithionit enthält, zu einem Teig angerührt. Dann werden 600 Teile Glasperlen (Durchmesser 0,8 bis 1 mm) und 3 Teile Lauryltrimethylammoniumchlorid zugegeben und die Suspension mit einem hochtourigen Rühren (2000 tr/min) 4 h bei 25 bis 30°C unter Luftzutritt gemahlen. Die Aufarbeitung erfolgt analog Beispiel 1. Man erhält ein Pigment, das in seinen koloristischen Eigenschaften dem nach Beispiel 1 erhaltenen Pigment entspricht.

*Beispiel 3:*

Es wird wie im Beispiel 2 angegeben verfahren, verwendet jedoch als oberflächenaktives Mittel 3 Teile Ölsäureäthanolamid. Man erhält ein Pigment, das im Vollton rotstichige Violettfärbungen von hoher Lasur gibt. Im Weissverschnitt erhält man violette Färbungen, die bei blauerem Farbton etwas weniger Farbstärke und etwas geringere Brillanz aufweisen als Färbungen des Pigments aus Beispiel 1.

*Beispiel 4:*

30 Teile Leukoverbindung des Tetrachlorthioindigo in Form des feuchten Presskuchens werden in eine Mischung aus 300 Teilen Wasser, 10 Teilen Natronlauge (50%ig) und 3 Teilen Natriumdithionit eingetragen. Zur Suspension werden 3 Teile Kolophoniumseife (Natriumsalz) und 600 Teile Kunststoffperlen (Durchmesser 0,8 bis 1 mm) gegeben und die Suspension mit einem hochtourigen Rührer (2000 tr/min) 4 h bei 35 bis 40°C unter Luftzutritt gemahlen. Die Aufarbeitung erfolgt wie in Beispiel 1 angegeben. Man erhält ein Pigment, das in seinen koloristischen Eigenschaften praktisch dem nach Beispiel 1 erhaltenen Pigment entspricht.

*Beispiel 5:*

50 Teile 4,4',7,7'-Tetrachlorthioindigo werden in 1500 Teilen Wasser suspendiert. Dann werden 40 Teile Natronlauge (50%ig) und 20 Teile Natriumdithionit zugegeben und das Gemisch 2 h bei 40°C gerührt, wobei die olivbraune Leukoverbindung ausfällt. Die Leukoverbindung wird filtriert und das Filtergut mit 1000 Teilen blinder Küpe (= Lösung von 20 Teilen Natronlauge 50%ig und 10 Teilen Natriumdithionit in 1000 Teilen Wasser) bis zum hellen Filtrat gewaschen.

Die Leukoverbindung wird mit Wasser zu einer 10%igen Suspension angerührt. Dann werden 5 Teile dimeres Kolophonium (Natriumsalz), 20 Teile Natronlauge 50%ig, 10 Teile Natriumdithionit und 600 Teile Kunststoffperlen (Durchmesser 0,8 bis 1 mm) zugegeben und das Gemisch mit einem Rührer (2000 tr/min) 5 h bei 30°C unter Zutritt von Luft gerührt. Die Perlen werden abgesiebt und die Suspension analog Beispiel 1 aufgearbeitet. Ausbeute: 51 Teile Pigment, das in seinen koloristischen Eigenschaften praktisch dem nach Beispiel 1 erhaltenen entspricht und gleichzeitig lösungsmittelechter ist.

*Beispiel 6:*

30 Teile 4,4',7,7'-Tetrachlorthioindigo, in Form des wässerigen Presskuchens, werden mit 330 Teilen Wasser, das 15 Teile Natronlauge (50%ig) und 10 Teile Natriumdithionit enthält, zu einem Teig angerührt. Nach Zugeben von 500 Teilen Glasperlen (Durchmesser 0,8 bis 1 mm) wird mit einem hochtourigen Rühren (2000 tr/min) 4 h bei 25 bis 30°C unter Luftzutritt gemahlen. Die Aufarbeitung folgt Beispiel 1. Man erhält 28 Teile eines Pigments, das im Weissverschnitt einen blaueren Farbton, in seinen sonstigen Eigenschaften weitgehend dem nach Beispiel 1 erhaltenen Pigment gleicht.

*Beispiel 7:*

Es wird wie in Beispiel 1 gearbeitet, jedoch werden die 3 Teile dimerisiertes Kolophoniumharz durch eine Mischung aus 3 Teilen oxäthyliertes Ölsäure (5 ÄO/mol) und 1 Teil oxäthylierter $C_{16}$-Fettalkohol (30 ÄO/mol) ersetzt. Man erhält 30 Teile eines Pigments, das im Weissverschnitt gegenüber dem Pigment des Beispiels 1 blaustichigere Färbungen liefert, die etwa 10% farbschwächer sind. Die Purtonfärbung ist etwas weniger brillant als die des Pigments des Beispiels 1.

*Beispiel 8:*

Es wird analog Beispiel 1 gearbeitet, jedoch erfolgt die Einwirkung von Scherkräften in Gegenwart von Luftsauerstoff 3 h bei 60°C. Man erhält 32 Teile eines Pigments, das weitgehend in der Koloristik dem Pigment des Beispiels 1 entspricht.

*Beispiel 9:*

Die Leukoverbindung des 4,4',7,7'-Tetrachlorthioindigo wird analog Beispiel 5 hergestellt und isoliert und mit Wasser zu einem 10%igen Teig angerührt. Diesem werden 5 Teile dimeres Kolophonium (Natriumsalz), 20 Teile Natronlauge (50%ig), 2 Teile Natriumdithionit und 600 Teile Kunststoffperlen (Durchmesser 0,8 bis 1 mm) zugegeben und mittels eines hochtourigen Rührers (2000 tr/min) 5 h bei 30°C unter Luftzutritt gemahlen. Anschliessend werden die Perlen abgesiebt und die Suspension wie in Beispiel 1 beschrieben aufgearbeitet. Man erhält 51 Teile eines Pigments, das gegenüber dem Pigment des Beispiels 5 eine nur wenig geringere Farbstärke bei etwas verminderter Brillanz aufweist.

*Beispiel 10:*

Es wird wie in Beispiel 1 verfahren, jedoch wird das dimerisierte Kolophoniumharz durch 15 Teile Diisobutylnaphthalin-1-sulfonsäure (Natriumsalz) ersetzt. Man erhält 29 Teile Pigment, das in seiner Koloristik dem Pigment des Beispiels 1 entspricht.

*Beispiel 11:*

Es wird wie in Beispiel 1 verfahren, jedoch wird das Kolophoniumharz durch 3 Teile Dodecylbenzolsulfonsäure (Natriumsalz) ersetzt. Man erhält 29 Teile Pigment, das in seiner Koloristik weitgehend dem Pigment des Beispiels 1 entspricht.

*Beispiel 12:*

Es wird wie in Beispiel 1 verfahren, jedoch wird das Kolophoniumharz durch 2 Teile eines Anlagerungsproduktes von 9 mol Äthylenoxid an 1 mol Ölsäureäthanolamid ersetzt. Man erhält 30 Teile Pigment, das gegenüber dem Pigment des Beispiels 1 etwa 10% schwächere, etwas blauere und etwas weniger brillante Färbungen liefert.

*Beispiel 13:*

Es wird wie in Beispiel 2 verfahren, jedoch wird das Lauryltrimethylammoniumchlorid durch 2 Teile Dimethyldibenzylammoniumchlorid ersetzt. Man erhält 29 Teile Pigment, das in der Koloristik dem Pigment des Beispiels 2 entspricht.

*Beispiel 14:*

Es wird wie in Beispiel 2 verfahren, jedoch wird das Lauryltrimethylammoniumchlorid durch 1 Teil eines mit Dimethylsulfat quaternierten Estergemisches aus Stearinsäure und Triäthanolamin (Molverhältnis 1:1) ersetzt. Man erhält 28 Teile Pigment, das in der Koloristik dem Pigment des Beispiels 2 entspricht.

*Beispiel 15:*

Es wird wie in Beispiel 2 verfahren, jedoch werden nur 5 Teilen Natriumdithionit und 8 Teile Natronlauge (50%ig) bei sonst gleichem Reaktionsansatz angewendet. Man erhält 30 Teile eines Pigments, das in der Koloristik weitgehend dem Pigment des Beispiels 1 entspricht.

**Patentansprüche**

1. Verfahren zur Herstellung von lasierenden Pigmentformen des 4,4',7,7'-Tetrachlorthioindigo, dadurch gekennzeichnet, dass man die Leukoverbindung des Tetrachlorthioindigos in wässerig-alkalischer Suspension in Gegenwart von Dithionit unter gleichzeitiger Einwirkung von Scherkräften bei Temperaturen zwischen 20 und 100°C oxidiert.

2. Verfahren nach dem Anspruch 1, dadurch gekennzeichnet, dass die Oxidation in Gegenwart von 0,2 bis 20 Gew.%, bezogen auf Leukoverbindung, oberflächenaktiver Mittel erfolgt.

3. Verfahren nach dem Anspruch 1, dadurch gekennzeichnet, dass die Oxidation in Gegenwart von 0,5 bis 15 Gew.%, bezogen auf Leukoverbindung, oberflächenaktiver Mittel erfolgt.

4. Verfahren nach einem der Ansprüche 1, 2 oder 3, dadurch gekennzeichnet, dass die Oxidation in Gegenwart anionischer oder kationischer oberflächenaktiver Mittel erfolgt.

5. Verfahren gemäss einem der Ansprüche 1, 2, 3 oder 4, dadurch gekennzeichnet, dass man als oberflächenaktive Mittel Abietinsäure, Kolophonium, hydriertes Kolophonium, dimerisiertes Kolophonium, $C_{13}$- bis $C_{18}$-Paraffindisulfonsäuren, Sulfobernsteinsäuredi-$C_1$- bis $C_8$-alkylester in Form der Alaklimetall- oder Ammoniumsalze, $C_{10}$- bis $C_{20}$-Alkyltri-($C_1$- bis $C_4$-alkyl)-ammoniumsalze, N-$C_{10}$- bis $C_{18}$-Alkylimidazoliniumsalze in Form der Chloride, Sulfate, Methylsulfate, Benzolsulfonate oder Toluolsulfonate, Anlagerungsprodukte von Äthylenoxid an $C_{12}$- bis $C_{20}$-Carbonsäuren (5 bis 30 mol/mol Carbonsäure) und an N-(Hydroxy-$C_2$- bis $C_4$-alkyl)amide von $C_{16}$- bis $C_{20}$-Carbonsäuren (3 bis 15 mol/mol Amid) oder Gemische dieser Mittel verwendet.

6. Verfahren nach einem der Ansprüche 1, 2, 3, 4 oder 5, dadurch gekennzeichnet, dass die Oxidation bei Temperaturen zwischen 30 und 80° C erfolgt.

7. Verfahren nach einem der Ansprüche 1, 2, 3, 4, 5 oder 6, dadurch gekennzeichnet, dass die Oxidation mit Luftsauerstoff erfolgt.

## Revendications

1. Procédé de préparation de formes pigmentaires de glaçage du tétrachloro-4,4',7,7'-thioindigo, caractérisé en ce que l'on oxyde le leucodérivé du tétrachlorothio-indigo en suspension aqueuse-alcaline en présence de dithionite à des températures comprises entre 20 et 100° C, avec action simultanée de forces de cisaillement.

2. Procédé suivant la revendication 1, caractérisé en ce que l'oxydation est réalisée en présence de 0,2 à 20% en poids, par rapport au leucodérivé, de substances tensio-actives.

3. Procédé suivant la revendication 1, caractérisé en ce que l'oxydation est réalisée en présence de 0,5 à 15% en poids, par rapport au leucodérivé, de substances tensio-actives.

4. Procédé suivant l'une des revendications 1, 2 ou 3, caractérisé en ce que l'oxydation est réalisée en présence de substances tensio-actives anioniques ou cationiques.

5. Procédé suivant l'une des revendications 1, 2, 3 ou 4, caractérisé en ce que la substance tensioactive est choisie parmi l'acide abiétique, la colophane, une colophane hydrogénée, une colophane dimérisée, les acides paraffine-($C_{13}$ à $C_{18}$)-disulfoniques, les sels de métaux alcalins et d'ammonium de sulfosuccinates de dialcoyle-($C_1$ à $C_8$), les sels d'alcoyl-($C_{10}$ à $C_{20}$)-trialcoyl-($C_1$ à $C_4$)-ammonium, les sels de N-alcoyl-($C_{10}$ à $C_{18}$)-imidazolinium tels que les chlorures, les sulfates, les méthylsulfates, les benzènesulfonates et les toluènesulfonates, les produits d'addition de l'oxyde d'éthylène sur des acides carboxyliques en $C_{12}$ à $C_{20}$ (avec 5 à 10 mol d'oxyde par mole d'acide) et sur des N-[hydroxyalcoyl-($C_2$ à $C_4$)]-amides d'acides carboxyliques en $C_{16}$ à $C_{20}$ (avec 3 à 15 mol d'oxyde par mole d'amide) et des mélanges de ces substances.

6. Procédé suivant l'une des revendications 1, 2, 3, 4 ou 5, caractérisé en ce que l'oxydation est réalisée à des températures comprises entre 30 et 80° C.

7. Procédé suivant l'une des revendications 1, 2, 3, 4, 5 ou 6, caractérisé en ce que l'oxydation est réalisée à l'aide de l'oxygène de l'air.

## Claims

1. A process for the preparation of a transparent pigmentary form of 4,4',7,7'-tetrachlorothio-indigo, characterized in that the leuco compound of tetrachlorothio-indigo is oxidized in aqueous alkaline suspension in the presence of dithionite at from 20 to 100° C, with simultaneous exposure to shearing forces.

2. A process as claimed in claim 1, characterized in that the oxidation is carried out in the presence of from 0.2 to 20% by weight, based on the leuco compound, of surfactants.

3. A process as claimed in claim 1, characterized in that the oxidation is carried out in the presence of from 0.5 to 15% by weight, based on leuco compound, of surfactants.

4. A process as claimed in claim 1, 2 or 3, characterized in that the oxidation is carried out in the presence of anionic or cationic surfactants.

5. A process as claimed in claim 1, 2, 3 or 4, characterized in that abietic acid, rosin, hydrogenated rosin, dimerized rosin, $C_{13}$-$C_{18}$-paraffindisulfonic acids or di-$C_1$-$C_8$-alkylsulfosuccinates in the form of the alkali metal salts or ammonium salts, of $C_{10}$-$C_{20}$-alkyltri-($C_1$-$C_4$-alkyl)ammonium salts or N-$C_{10}$-$C_{18}$-alkylimidazolinium salts in the form of chlorides, sulfates, methylsulfates, benzenesulfonates or toluenesulfonates, or of adducts of ethylene oxide with $C_{12}$-$C_{20}$-carboxylic acids (from 5 to 30 mol per mole of carboxylic acid) or with N-(hydroxy-$C_2$-$C_4$-alkyl)amides of $C_{16}$-$C_{20}$-carboxylic acids (from 3 to 15 mol per mole of amide) or of mixtures of these agents are used as surfactants.

6. A process as claimed in claim 1, 2, 3, 4 or 5, characterized in that the oxidation is carried out at temperatures of between 30 and 80° C.

7. A process as claimed in claim 1, 2, 3, 4, 5 or 6, characterized in that the oxidation is carried out with atmospheric oxygen.